# EUROPÄISCHE PATENTSCHRIFT

(11) **EP 0 965 924 B1**
(45) Veröffentlichungstag und Bekanntmachung des Hinweises auf die Patenterteilung: **03.03.2004**
(21) Anmeldenummer: 99201842.4
(22) Anmeldetag: 10.06.1999
(51) Int. Cl.: G06F 13/42

(54) **Anordung und Verfahren zum Übertragen von Adress-, Befehls- und/oder Datentelegrammen**
Method and device for transmitting telegrams of addresses, commands and data
Procédé et dispositif pour la transmission de télégrammes d'adresses, de commandes et de données

(30) Priorität: 19.06.1998 DE 19827337
(43) Veröffentlichungstag der Anmeldung: 22.12.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Hahn, Friedrich, 22335 Hamburg (DE); Schippmann, Gerd, 22335 Hamburg (DE); Meyer, Volker, 22335 Hamburg (DE); Ohl, Kirsten, 22335 Hamburg (DE)
(74) Vertreter: Peters, Carl Heinrich, Dipl.-Ing.

(56) Entgegenhaltungen:
- US-A- 4 811 277
- US-A- 5 495 481
- US-A- 5 745 685

## Beschreibung

Die Erfindung bezieht sich auf eine Anordnung mit einer Steuereinheit ("Master") und wenigstens einer gesteuerten Einheit ("Slave") zum Übertragen von Adreß-, Befehlsund/oder Datentelegrammen von der Steuereinheit zu (wenigstens einer) der gesteuerten Einheit(en) und zum Rückübertragen je eines Empfangsbestätigungssignals ("Acknowledge") von der bzw. den gesteuerten Einheit(en) an die Steuereinheit zu jedem der Adreß-, Befehls- und/oder Datentelegramme, wobei durch das Empfangsbestätigungssignal der Steuereinheit eine fehlerfreie Übertragung des betreffenden Adreß-, Befehls- und/oder Datentelegramms signalisiert wird.

Die Erfindung bezieht sich außerdem auf ein Verfahren zum Übertragen von Adreß-, Befehls- und/oder Datentelegrammen von einer Steuereinheit zu (wenigstens) einer gesteuerten Einheit und zum Rückübertragen je eines Empfangsbestätigungssignals von der bzw. den gesteuerten Einheit(en) an die Steuereinheit zu jedem der Adreß-, Befehlsund/oder Datentelegramme, wobei durch das Empfangsbestätigungssignal der Steuereinheit eine fehlerfreie Übertragung des betreffenden Adreß-, Befehls- und/oder Datentelegramms signalisiert wird.

Derartige Anordnungen bzw. Verfahren finden sich in sogenannten I²C-Bus-Systemen, also Steuerungs- und Datenbussystemen, die bevorzugt für die Steuerung und den Datenaustausch in komplexen Anordnungen der elektronischen Nachrichtentechnik, vorzugsweise der Unterhaltungselektronik, eingesetzt werden. Insbesondere werden mit solchen I²C-Bus-Systemen Schaltungsteile miteinander verbunden, die auf verschiedenen integrierten Halbleiterschaltungen angeordnet sind. Dabei kann die Steuereinheit ("Master") Daten bzw. Befehle über den Bus an eine oder mehrere gesteuerte Einheiten senden. Die gesteuerten Einheiten benötigen dazu eine Bus-Empfangsstufe.

Sollen dagegen auch Daten von den gesteuerten Einheiten ("Slaves") an die Steuereinheit ("Master) übertragen werden, sind die gesteuerten Einheiten zusätzlich mit einer Bus-Sendestufe auszurüsten. Eine kombinierte Bus-Empfangsstufe und Bus-Sendestufe ("Transceiver") benötigt etwa 30 bis 40 % mehr Bauteile als eine Bus-Empfangsstufe allein. Sollen von den gesteuerten Einheiten lediglich in geringem Umfang Daten gesendet werden, ist die Anordnung einer Bus-Sendestufe allein zu diesem Zweck auf der betreffenden integrierten Halbleiterschaltung wegen des damit verbundenen, erhöhten Flächenbedarfs auf dem Halbleiterkörper sehr unwirtschaftlich.

*Aus der US 4 811 277 A ist eine Nachrichten-Schnittstelle, insbesondere zur Anwendung in elektronischen Rechenanlagen und für die Übertragung von Nachrichten zwischen Rechnern untereinander oder zwischen Rechnern einerseits und mit ihnen verbundenen Einrichtungen andererseits und vorzugsweise zur Datenübertragung zwischen integrierten Schaltkreisen, bekannt. Diese zur Durchführung der Nachrichtenübertragung mit Hilfe von seriellen Bit-Paketen auf nicht gemeinsam benutzten Leitungen im Einrichtungsbetrieb vorgesehene Nachrichten-Schnittstelle weist einen Datenpaketgenerator auf, der zum Ausgeben eines Datenwortes in einem Datenpaket mit einem ersten Datenformat oder in einem Empfangsbestätigungs-Paket mit einem zweiten Datenformat eingerichtet ist. Ein Datenpaketdekodierer ist vorgesehen zum Dekodieren eingehender Datenpakete*.

Die Erfindung hat die Aufgabe, eine Anordnung und ein Verfahren der eingangs genannten Art in der Weise auszubilden, daß Daten in begrenztem Umfang auch ohne Bus-Sendestufen in den gesteuerten Einheiten an die Steuereinheit übertragbar sind.

Erfindungsgemäß wird diese Aufgabe bei einer Anordnung der eingangs genannten Art dadurch gelöst, daß wenigstens eine der gesteuerten Einheiten derart ausgebildet ist, daß das Empfangsbestätigungssignal auf wenigstens eines der Adreß-, Befehls- und/oder Datentelegramme nur abhängig von einem auswählbaren Parameter des Betriebszustands der gesteuerten Einheit auch bei fehlerfreier Übertragung des Adreß-, Befehls- und/oder Datentelegramms un terdrückt und der Steuereinheit in diesem Fall stets eine fehlerhafte Übertragung signalisiert wird, und daß die Steuereinheit mit einem Auswerteteil ausgebildet ist, in dem das Ausbleiben eines Empfangsbestätigungssignals auf das vorgenannte Adreß-, Befehls- und/oder Datentelegramm als Informationssignal über den auswählbaren Parameter des Betriebszustands der gesteuerten Einheit empfangen und verarbeitet wird.

Nach der Erfindung ist außerdem das eingangs genannte Verfahren derart ausgestaltet, daß das Empfangsbestätigungssignal in (wenigstens einer) der gesteuerten Einheit(en) auf wenigstens eines der Adreß-, Befehls- und/oder Datentelegramme nur abhängig von einem auswählbaren Parameter des Betriebszustands der gesteuerten Einheit auch bei fehlerfreier Übertragung des Adreß-, Befehls- und/oder Datentelegramms unterdrückt und der Steuereinheit in diesem Fall stets eine fehlerhafte Übertragung signalisiert wird, und daß das Ausbleiben eines Empfangsbestätigungssignals in der Steuereinheit auf das vorgenannte Adreß-, Befehls- und/oder Datentelegramm als Informationssignal über den auswählbaren Parameter des Betriebszustands der gesteuerten Einheit ausgewertet wird.

Bei der Erfindung wird somit das Empfangsbestätigungssignal der jeweils von der Steuereinheit angesprochenen gesteuerten Einheit nicht nur zur Bestätigung der fehlerfreien Übertragung des Adreß-, Befehls- und/oder Datentelegramms verwendet, vielmehr lassen sich ohne zusätzlichen Schaltungsaufwand auch Informationen an die Steuereinheit rückübertragen. Die dafür nötigen Funktionen werden in die Bauteile der Steuereinheit und der gesteuerten Einheit(en) aufgenommen, die ohnehin zur Ablaufsteuerung der Befehls- und/oder Datenübertragung zwischen den genannten Einheiten erforderlich sind. Dabei ist es möglich, besondere Adreß-, Befehls- und/oder Datentelegramme vorzusehen, auf die hin in der jeweils angesprochenen gesteuerten Einheit oder gegebenenfalls auch in mehreren gesteuerten Einheiten gleichzeitig ein bestimmter Parameter des Betriebszustandes überprüft und je nach Ergebnis dieser Überprüfung das zugeordnete Empfangsbestätigungssignal rückübertragen oder nicht rückübertragen wird. Durch eine feste Vorgabe innerhalb der gesteuerten Einheit(en) kann dabei ein bestimmter Parameter des Betriebszustands grundsätzlich abgefragt werden, beispielsweise, ob die Versorgungsspannung einen bestimmten Schwellenwert erreicht oder nicht. Durch die Art des übertragenen Adreß-, Befehls- und/oder Datentelegramms kann in der den gesteuerten Einheit(en) aber auch eine Auswahl zwischen mehreren abzufragenden Parametern des Betriebszustands der gesteuerten Einheit(en) getroffen werden. Beispielsweise können damit Zustandsregister abgefragt werden. Diese Abfrage kann einerseits durch Verschlüsselung innerhalb des Adreß-, Befehls- und/oder Datentelegramms ausgewählt oder nach einer vorgegebenen Befehlssequenz für die interessierenden Parameter nacheinander vorgenommen werden. Zur Durchführung der dafür nötigen Befehlsabläufe enthält die Steuereinheit ein Auswerteteil, welches als gesonderte Logikschaltung ausgebildet sein kann oder bevorzugt von einer ohnehin für den Betrieb der Übertragung der Adreß-, Befehls- und/oder Datentelegramme vorgesehenen Ablaufsteuerung umfaßt ist. In diesem Auswerteteil wird das Ausbleiben eines Empfangsbestätigungssignals als Information über den ausgewählten Parameter des Betriebszustands der angesprochenen gesteuerten Einheit(en) detektiert. Der Auswerteteil umfaßt dazu vorzugsweise eine Befehlsablaufsteuerung, in der auch Steuerbefehle vorgesehen sein können, mit denen gegebenenfalls der detektierte Betriebszustand gezielt geändert werden kann.

Die Erfindung ermöglicht somit eine Erweiterung des Informationsaustausches zwischen der Steuereinheit und der (den) gesteuerten Einheit(en), ohne daß die gesteuerte(n) Einheit(en) (eine) zusätzliche Sendestufe(n) zum Übertragen von Adreß-, Befehlsund/oder Datentelegrammen an die Steuereinheit enthalten muß (müssen). Dadurch kann erheblicher Schaltungsaufwand eingespart werden. Die Erfindung ist insbesondere vorteilhaft für die Rückübertragung lediglich geringer Datenmengen, für die gesonderte Sendestufen in den gesteuerten Einheiten nicht ausgelastet wären. Insbesondere ist die Erfindung vorteilhaft einsetzbar für die Abfrage vorbestimmter Parameter, für die als Antwort eine Ja-Nein-Information vorgesehen ist.

In einer Ausgestaltung der erfindungsgemäßen Anordnung umfaßt die gesteuerte Einheit bzw. umfassen die gesteuerten Einheiten je eine Überwachungsanordnung zum Überwachen des Parameters bzw. der Parameter des Betriebszustands und zum Unterdrücken des Empfangsbestätigungssignals auf ein vorgebbares Adreß-, Befehlsund/oder Datentelegramm in Abhängigkeit von dem überwachten Parameter bzw. den überwachten Parametern des Betriebszustands.

Eine solche Überwachungsanordnung kann vorzugsweise ein oder mehrere Zustandsregister enthalten, die den Parametern des zu überwachenden Betriebszustands zugeordnet sind und in denen eine Information über den aktuellen Wert dieses Parameters gespeichert ist. Mit besonders kodierten Adreß-, Befehls- und/oder Datentelegrammen kann dann zu jedem der Parameter gezielt abgefragt werden, ob er einen zulässigen Wert angenommen hat oder nicht. Im letzteren Fall kann bevorzugt das Empfangsbestätigungssignal des zugeordneten Adreß-, Befehls- und/oder Datentelegramms unterdrückt werden, wodurch die Steuereinheit eine gezielte Infomation darüber enthält, daß der angesprochene Parameter des Betriebszustands sich unzulässig verändert hat. Von dem Auswerteteil der Steuereinheit können dann gegebenenfalls Adreß-, Befehls- und/oder Datentelegramme ausgelöst werden, durch die eine gezielte Korrektur des Betriebszustands vorgenommen wird.

Wie bereits vorstehend angedeutet, kann in einem einfachen Fall ein unzulässiger Wert eines Parameters des Betriebszustands einer gesteuerten Einheit auch grundsätzlich die Empfangsbestätigungssignale auf alle eingehenden Adreß-, Befehls- und/oder Datentelegramme unterdrücken. Dann entfällt eine gesonderte Abfrage durch die Steuereinheit; diese stellt vielmehr aus dem Fehlen der Empfangsbestätigungssignale bei der betriebsgemäßen Befehls- und/oder Datenübertragung ein Abweichen des Betriebszustands vom Soll fest. Auch hier wird durch den Auswerteteil der Steuereinheit eine entsprechende Maßnahme zur Korrektur des Betriebszustands der angesprochenen gesteuerten Einheit ausgelöst.

Zur Unterscheidung zwischen Übertragungsfehlern in den Adreß-, Befehls- und/oder Datentelegrammen zwischen Steuereinheit und gesteuerter Einheit einerseits und der Meldung eines unzulässigen Betriebszustands der gesteuerten Einheit andererseits ist nach einer weiteren Ausgestaltung der Erfindung vorgesehen, daß beim Ausbleiben eines Empfangsbestätigungssignals auf ein Adreß-, Befehls- und/oder Datentelegramm dieses von der Steuereinheit in einer vorgebbaren Abfolge wiederholt gesendet wird und aus einem entsprechend wiederholten Ausbleiben des Empfangsbestätigungssignals eine Information über das Auftreten des auswählbaren Parameters des Betriebszustands der gesteuerten Einheit abgeleitet wird.

Durch die wiederholte Übersendung des Adreß-, Befehls- und/oder Datentelegramms und aus der dabei wiederkehrenden Unterdrückung des Empfangsbestätigungssignals kann die Wahrscheinlichkeit eines Übertragungsfehlers so weit verringert werden, daß praktisch sicher auf eine Rückmeldung über den Betriebszustand geschlossen werden kann. Die gewünschte Wahrscheinlichkeit, mit der diese Feststellung getroffen werden soll, kann durch die vorgegebene Folge, insbesondere durch die Anzahl der Wiederholungen bei der Übertragung desselben Adreß-, Befehls- und/oder Datentelegramms, gewählt werden. Die vorgebbare Abfolge umfaßt auch die Möglichkeit, in vorbestimmter periodischer Wiederkehr bestimmte Betriebszustände zu überprüfen.

In einer anderen Ausgestaltung der erfindungsgemäßen Anordnung, bei der ein Adreß-, Befehls- und/oder Datentelegramm einen Adreßabschnitt und einen Befehls- bzw. Datenabschnitt umfaßt und bei der für jeden dieser Abschnitte ein gesondertes Empfangsbestätigungssignal vorgesehen ist, ist das Unterdrücken nur des Empfangsbestätigungssignals für den Befehls- bzw. Datenabschnitt vorgesehen. Somit wird die gewünschte Rückübertragung lediglich durch Beeinflussung des Empfangsbestätigungssignals für den Befehls- bzw. Datenabschnitt vorgenommen, während der Adreßabschnitt stets nur der Prüfung auf fehlerfreie Übertragung unterliegt. Dadurch wird auch eine gezielte Abfrage bei jeder einzelnen gesteuerten Einheit möglich. Wenn der Adreßabschnitt weiterhin eine Adreßinformation über ein speziell anzusprechendes Register bzw. eine über dieses Register speziell anzusprechende Baugruppe der gesteuerten Einheit umfaßt, kann damit eine sehr spezielle Abfrage vorgenommen werden.

Eine bevorzugte Einsatzmöglichkeit der erfindungsgemäßen Anordnung und des erfindungsgemäßen Verfahrens liegt darin, daß der auswählbare Betriebszustand der gesteuerten Einheit(en) derjenige ist, der nach einem Einbruch der Versorgungsspannung auftritt, die der (den) gesteuerten Einheit(en) zugeführt wird.

Ein Einbruch der Versorgungsspannung für die gesteuerte(n) Einheit(en) ist einerseits einfach zu detektieren und rückzumelden und hat andererseits große Auswirkungen auf den Betriebszustand, d.h. die Betriebsbereitschaft der betroffenen gesteuerten Einheit. Wenn diese gesteuerte Einheit beispielsweise Speicher enthält, die bei einem Einbruch der Versorgungsspannung wenigstens teilweise gelöscht werden, kann sich nach Wiederherstellung der Versorgungsspannung ein unkontrollierter, unerwünschter Betriebszustand einstellen. Dies muß von der Steuereinheit möglichst umgehend erkannt und durch eine Neuinitialisierung der gesteuerten Einheit behoben werden. Die Erfindung ermöglicht diesen Vorgang in einfacher Weise ohne zusätzlichen Schaltungsaufwand.

Die erfindungsgemäße Anordnung und das erfindungsgemäße Verfahren sind vorzugsweise bei Geräten der elektronischen Nachrichtentechnik einsetzbar. Ein bevorzugtes Anwendungsgebiet sind Geräte der Unterhaltungselektronik, beispielsweise Fernseher, Videorecorder oder Monitore. So kann beispielsweise in einem Monitor die Ablenkungssteuerung überwacht werden. Die durch die Erfindung erzielte Einsparung an Schaltungsaufwand ist besonders bedeutsam für Serienprodukte großer Stückzahlen in den genannten Anwendungsbereichen.
Ausführungsbeispiele der Erfindung sind in der Zeichnung dargestellt und werden im nachfolgenden näher beschrieben. Es zeigen
Fig. 1 eine blockschematische Darstellung eines Bussystems zum Einsatz der Erfindung,
Fig. 2 eine schematische Darstellung der Gliederung eines Adreß-, Befehls- und/oder Datentelegramms, wie es im Betrieb der Anordnung nach Fig. 1 zum Einsatz gelangt,
Fig. 3 eine blockschematische Darstellung eines Beispiels für eine erfindungsgemäße Anordnung aus einer Steuereinheit und einer gesteuerten Einheit,
Fig. 4 ein Flußdiagramm für ein erstes Beispiel eines Betriebsablaufes einer erfindungsgemäßen Anordnung bzw. für ein erstes Beispiel des erfindungsgemäßen Verfahrens,
Fig. 5 ein Flußdiagramm für ein zweites derartiges Ausführungsbeispiel.

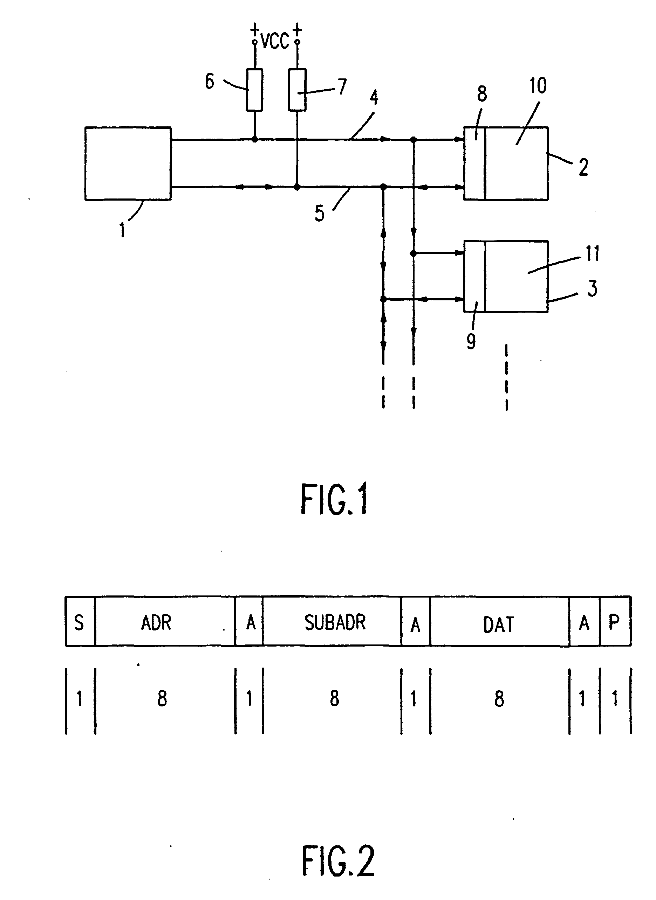

In Fig. 1 ist zu einem Ausführungsbeispiel der Erfindung, welches in Zusammenhang mit dem I²C-Bus zur Anwendung kommt, der grundsätzliche Aufbau des I²C-Bussystems grob blockschematisch wiedergegeben. Darin ist mit dem Bezugszeichen 1 eine Steuereinheit bezeichnet, die mit zwei in Fig. 1 dargestellten (und gegebenenfalls weiteren) gesteuerten Einheiten 2, 3 verbunden ist. Zur Verbindung der Steuereinheit 1 mit den gesteuerten Einheiten 2, 3 dient einerseits eine Taktleitung 4, über die der Systemtakt von der Steuereinheit 1 an die gesteuerten Einheiten 2, 3 zur Synchronisierung des gesamten I²C-Bussystems übertragen wird. Die Steuereinheit 1, die bevorzugt mit einem Microprozessor ausgebildet ist, wird auch als "Master" bezeichnet. Die gesteuerten Einheiten 2, 3 bilden im I²C-Bussystem sogenannte "Slaves".

Die Information der Adreß-, Befehls- und/oder Datentelegramme innerhalb des I²C-Bussystems wird über eine Datenleitung 5 übertragen, auf der die Signale im Gegensatz zur Taktleitung 4 in beiden Richtungen, d.h. sowohl von der Steuereinheit 1 zu den gesteuerten Einheiten 2, 3 als auch umgekehrt übertragen werden können. Diese Übertragung wird durch den Systemtakt auf der Taktleitung 4 getaktet.

Sowohl die Taktleitung 4 als auch die Datenleitung 5 sind über je einen Widerstand 6 bzw. 7 mit dem positiven Pol VCC einer Versorgungsspannungsquelle verbunden, durch die auch die Steuereinheit 1 und die gesteuerten Einheiten 2, 3 gespeist werden. Dadurch liegen die Taktleitung 4 und die Datenleitung 5 grundsätzlich auf positivem Potential, von welchem sie für die einzelnen Impulse des Systemtaktes bzw. die entsprechend gesetzten Bits der Adreß-, Befehls- und/oder Datentelegramme auf ein niedriges Potential gezogen werden können. Jede der gesteuerten Einheiten 2, 3 umfaßt eine Bus-Empfangsstufe 8 bzw. 9, über die die zugehörige gesteuerte Einheit 2 bzw. 3 an die Taktleitung 4 und die Datenleitung 5 angeschlossen ist und in der die Umsetzung und Verarbeitung der Adreß-, Befehls- und/oder Datentelegramme von der Steuereinheit 1 in entsprechende Daten bzw. Befehle für Betrieb desjenigen Teils der gesteuerten Einheit 2 bzw. 3 vorgenommen wird, durch den die (Teil-) Funktion des Gerätes realisiert wird, in dem der dargestellte I²C-Bus zum Einsatz kommt. Diese Teile der gesteuerten Einheiten 2 bzw. 3 sind als Funktionsteile mit den Bezugszeichen 10 bzw. 11 bezeichnet. Als Beispiel für ein solches Funktionsteil sei die Ablenkungssteuerung für die Bildröhre in einem Monitor genannt.

Für eine Übertragung von Adreß-, Befehls- und/oder Datentelegrammen von den gesteuerten Einheiten 2 bzw. 3 an die Steuereinheit 1 kann anstelle der Bus-Empfangsstufen 8 bzw. 9 ein sogenannter "Transceiver" zum Einsatz kommen, der eine Kombination der Bus-Empfangsstufe mit einer Bus-Sendestufe umfaßt. Eine solche Anordnung ist jedoch wesentlich aufwendiger als eine reine Bus-Empfangsstufe; insbesondere benötigt sie bei einem I²C-Bus eine um etwa 30 bis 40 % erhöhte Anzahl an Schaltungsbauteilen im Vergleich zu einer einfachen Bus-Empfangsstufe. Dieser erhöhte Schaltungsaufwand läßt sich bei Anwendung der Erfindung umgehen.

Fig. 2 zeigt ein Ausführungsbeispiel für die zeitliche Einteilung eines Adreß-, Befehlsund/oder Datentelegramms, wobei die einzelnen Teile dieses Telegramms sinnbildlich als Blöcke entlang einer in waagerechter Richtung nach rechts verlaufenden Zeitachse abgetragen sind. Für dieses Beispiel ist im Diagramm nach Fig. 2 außerdem die jeweilige Länge der einzelnen Teile des Telegramms als Anzahl von Datenbits angegeben.

Ein Adreß-, Befehls- und/oder Datentelegramm der in Fig. 2 dargestellten Art beginnt mit einem Startbit S, dem eine acht Bit umfassende Adresse ADR folgt, mit der die anzusprechende gesteuerte Einheit identifiziert wird. Die Adresse ADR wird mit einem Zeitintervall abgeschlossen, welches für ein Empfangsbestätigungssignal A reserviert ist. Gemäß dem allgemein bekannten I²C-Bus-Protokoll wird während dieses dem Empfangsbestätigungssignal A zugeordneten Zeitintervalls die Steuereinheit 1 von ihrer Sendebetriebsart in ihre Empfangsbetriebsart umgeschaltet, wodurch das Potential auf der Datenleitung 5 auf dasjenige des positiven Pols VCC der Versorgungsspannungsquelle ansteigt. Wird nun von der gesteuerten Einheit ein Empfangsbestätigungssignal auf die Datenleitung 5 gegeben, schaltet die gesteuerte Einheit innerhalb des zugeordneten Zeitintervalls die Datenleitung 5 auf niedriges Potential. Dieser Potentialwechsel wird von der Steuereinheit als Empfangsbestätigungssignal identifiziert. Bleibt dagegen das Potential auf der Datenleitung 5 während des für das Empfangsbestätigungssignal A vorgesehenen Zeitintervalls auf einem hohen Wert, wird dies von der Steuereinheit als fehlendes Empfangsbestätigungssignal detektiert und kann entsprechend ausgewertet werden.

An das Zeitintervall für das Empfangsbestätigungssignal A für die Adresse ADR schließt sich ein Telegrammteil an, welcher eine Unteradresse SUBADR enthält, die innerhalb der angesprochenen, gesteuerten Einheit ein bestimmtes Befehls- bzw. Datenregister adressiert. Mit dieser Unteradresse SUBADR können mit dem Telegramm zu übertragende Befehle bzw. Daten gezielt eingegeben werden. Bei Anwendung der vorliegenden Erfindung können damit beispielsweise Zustandsregister zur Abfrage adressiert werden. Auch die Unteradresse SUBADR wird durch ein Zeitintervall abgeschlossen, in welchem ein Empfangsbestätigungssignal A rückübertragen werden kann.

Als dritten Teil umfaßt das vorliegende Telegramm gemäß Fig. 2 ein Datenwort DAT; an dieser Stelle kann selbstverständlich auch ein Befehlswort übertragen werden, wenn mit der Unteradresse SUBADR ein Befehlsregister angesprochen wird. An das Datenwort DAT (oder Befehlswort) schließt sich wiederum ein Zeitintervall für ein Empfangsbestätigungssignal A an, mit dem dieses Mal der korrekte Empfang des Datenwortes signalisiert werden kann. Das Telegramm nach Fig. 2 wird abgeschlossen durch ein Stoppbit P.

Während Startbit S, Empfangsbestätigungssignal A und Stoppbit P je eine Periode des Systemstaktes andauern, umfassen die Adresse ADR, die Unteradresse SUBADR und das Datenwort DAT je acht Bit, dauern also je acht Perioden des Sytemtaktes. Bei der Erfindung wird nun die Verarbeitung des Datenwortes DAT in der Weise abgewandelt, daß abhängig von dem zu überprüfenden Parameter des Betriebszustands der angesprochenen, gesteuerten Einheit auf das Datenwort DAT ein Empfangsbestätigungssignal ausschließlich in Abhängigkeit von dem Wert des genannten Parameters abgegeben wird, und zwar völlig unabhängig von der Frage, ob das Telegramm korrekt übertragen wurde. Die Empfangsbestätigungssignale für die Adresse ADR und die Unteradresse SUBADR werden dagegen vorzugsweise weiterhin ausschließlich danach abgegeben, ob die Übertragung fehlerfrei erfolgt ist oder nicht. Auf diese Weise kann mit der Erfindung gezielt die Information aus einer bestimmten Unteradresse innerhalb einer bestimmten gesteuerten Einheit abgefragt und überprüft werden. Der Auswerteteil der Steuereinheit, dem die Empfangsbestätigungssignale zugeleitet werden, enthält eine Ablaufsteuerung, in der die Information aus dem vorhandenen bzw. nicht vorhandenen Empfangsbestätigungssignal im Sinne der Überprüfung des betreffenden Parameters des Betriebszustandes ausgewertet und daraufhin vorgegebene Funktionsabläufe ausgelöst werden.

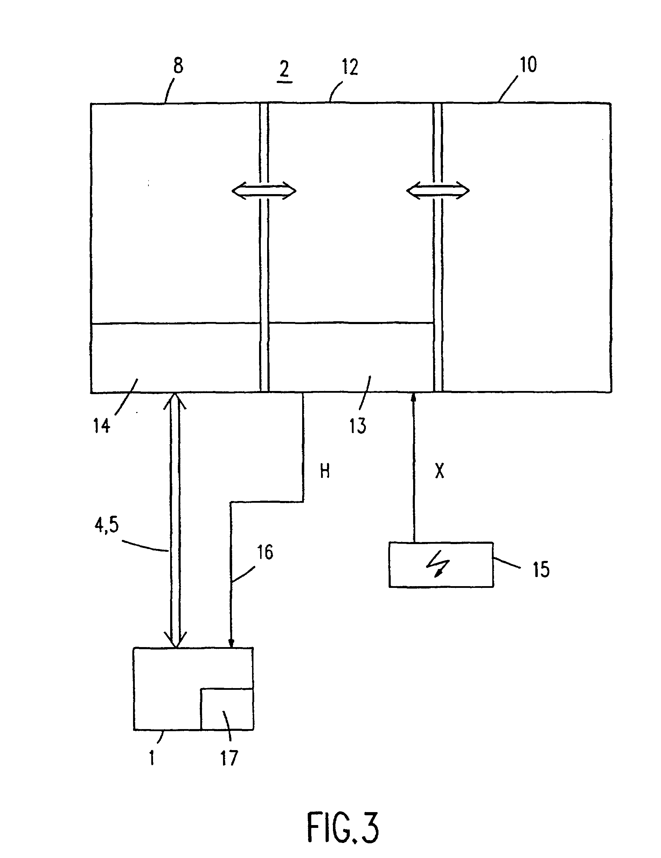

Fig. 3 zeigt in blockschematischer Darstellung eine Abwandlung der Anordnung nach Fig. 1, in der bereits beschriebene Elemente wieder mit denselben Bezugszeichen versehen sind. Der Einfachheit halber ist dieses Ausführungsbeispiel mit lediglich einer gesteuerten Einheit 2 dargestellt. Bei diesem Ausführungsbeispiel wird die Erfindung zur Überwachung desjenigen Betriebszustandes eingesetzt, der in der gesteuerten Einheit 2 nach einem Einbruch der Versorgungsspannung auftritt, die der gesteuerten Einheit 2 zugeführt wird.

Als Beispiel für die gesteuerte Einheit 2 ist eine integrierte Schaltung dargestellt, die zum Steuern der Bildwiedergabevorrichtung (vorzugsweise Bildröhre) bei einem Fernsehempfänger, einem Monitor oder dergleichen eingesetzt wird. Diese Schaltungsanordnung wird im folgenden als Ablenksteuerschaltung bezeichnet. Die Ablenksteuerschaltung 2 nach Fig. 3 umfaßt außer der Bus-Empfangsstufe 8 und dem Funktionsteil 10, welcher vorzugsweise Vertikal- und Horizontal-Oszillatoren, einen sogenannten Geometrieteil, usw. enthält, einen zwischen beiden eine Verbindung bildenden Umsetzerteil 12, welcher Befehls- und/oder Datenregister sowie Digital-Analog-Umsetzer für den Befehls- und/oder Datenfluß von der Bus-Empfangsstufe 8 zum Funktionsteil 10 sowie gegebenenfalls Analog-Digital-Umsetzer für den Informationsfluß in umgekehrter Richtung enthält. Außerdem umfaßt der Umsetzerteil 12 eine Schutzanordnung 13, durch die Schurzfunktionen der gesamten Ablenksteuerschaltung 2 vorgenommen werden.

Die gesamte Ablenksteuerschaltung 2 benötigt für ihre einwandfreie Arbeitsweise eine Versorgungsspannung, die einen Mindestwert nicht unterschreiten darf. Anderenfalls werden Register, beispielsweise im Umsetzteil 12 gelöscht, wodurch im Funktionsteil 10 fehlerhafte Signalverarbeitungen auftreten. Außerdem können derartige fehlerhafte Signalverarbeitungen auch bei noch korrekten Registerinhalten dann auftreten, wenn der Funktionsteil 10 mit zu geringer Versorgungsspannung gespeist wird. Um auch nach einem Einbruch der Versorgungsspannung eine korrekte Funktion der Ablenksteuerschaltung 2 sicherzustellen, muß von der Steuereinheit 1 ein neues Aufstarten der Ablenksteuerschaltung 2 wie beim neuen Einschalten der Versorgungsspannung, d.h. bei der Inbetriebnahme, durchgeführt werden. Keinesfalls kann die Ablenksteuerschaltung 2 nach einem Einbruch der Versorgungsspannung ohne weitere Maßnahmen weiter betrieben werden.

Um eine einwandfreie Funktion bei Inbetriebnahme oder nach einem Einbruch der Versorgungsspannung und deren Wiederansteigen sicherzustellen, ist für jeden der Teile der Ablenksteuerschaltung 2 eine gesonderte Versorgungsspannungsschwelle vorgesehen. Die niedrigste dieser Versorgungsspannungsschwellen kommt in der Bus-Empfangsstufe 8 zur Anwendung, so daß diese mit Sicherheit auch dann in Funktion ist, wenn die übrigen Teile betriebsbereit sind. Beim Anstieg oder Abfallen der Versorgungsspannung wird die Bus-Empfangsstufe 8 als erster Teil der Ablenksteuerschaltung 2 wirksam bzw. schaltet sich als letzter Teil ab.

Die mittlere der Versorgungsspannungsschwellen ist für den Umsetzerteil 12 vorgesehen, so daß z.B. bei Inbetriebnahme der Ablenksteuerschaltung die im Umsetzerteil 12 vorhandenen Register von der Bus-Empfangsstufe 8 geladen werden können, noch bevor der Funktionsteil 10 in Wirkung tritt. Umgekehrt bleiben beim Absinken der Versorgungsspannung die Elemente im Umsetzerteil 12 auch dann noch in Wirkung, wenn der Funktionsteil 10 sich abschaltet. Dieses Abschalten des Funktionsteils 10 erfolgt beim Unterschreiten der Versorgungsspannung unter die höchste der drei Versorgungsspannungsschwellen.

Insbesondere für die mittlere Versorgungsspannungsschwelle des Umsetzerteils 12 kann eine Hystherese vorgesehen sein, deren Eckpunkte jedoch innerhalb der Grenzen liegen müssen, die durch die niedrigste und die höchste Versorgungsspannungsschwelle vorgegeben sind. Geringfügige Schwankungen der Versorgungsspannung können dann nicht zu einem permanenten Ein- und Ausschalten des Umsetzerteils 12 führen.

Die Bus-Empfangsstufe 8 der Ablenksteuerschaltung 2 nach Fig. 3 umfaßt ein Steuerregister 14, in welches insbesondere alle Befehle und/oder Daten über den durch Taktleitung 4 und Datenleitung 5 gebildeten Bus eingeschrieben werden, die für die Funktion der Bus-Empfangsstufe 8 wichtig sind.

Die Schutzanordnung 13 des Umsetzerteils 12 der Ablenksteuerschaltung 2 ist mit einem Überwachungseingang X und einem Überwachungsausgang H ausgestattet. Der Überwachungseingang X ist mit einer Hochspannungserzeugungsstufe 15 verbunden. Ihm wird ein Meßwert zugeführt, der aus dem Wert der in der Hochspannungserzeugungsstufe 15 erzeugten Beschleunigungsspannung für die Bildwiedergabevorrichtung des Fernsehgerätes oder Monitors, in dem die Ablenksteuerschaltung 2 eingesetzt ist, abgeleitet wird. Übersteigt die Beschleunigungsspannung einen vorgegebenen Grenzwert und besteht dadurch die Gefahr erhöhter Abgabe von Röntgenstrahlung, wird dies durch den auf den Überwachungseingang X übertragenen Meßwert signalisiert. Über die Schutzanordnung 13 wird dann die Ablenksteuerschaltung 2, insbesondere deren Funktionsteil 10 derart angesteuert, daß die Bildwiedergabeanordnung dunkel gesteuert wird. Damit ist der Entstehung schädlicher Röntgenstrahlung vorgebeugt.

Der Überwachungsausgang H der Schutzanordnung 13 ist über eine vom Bus 4, 5 nicht umfaßte Verbindung 16 an die Steuereinheit 1 angeschlossen. Diese umfaßt einen Auswerteteil 17, in dem das Ausbleiben eines Empfangsbestätigungssignals auf von der Steuereinheit 1 ausgesandte Adreß-, Befehls- und/oder Datentelegramme als Informationssigna über den zu überwachenden Betriebszustand (bzw. dessen Parameter) ausgewertet wird. Im vorliegenden Beispiel zeigt ein Signal am Überwachungsausgang H der Steuereinheit 1 an, ob der Funktionsteil 10 der Ablenksteuerschaltung 2 in bestimmungsgemäßer Funktion arbeitet oder ob Abweichungen hiervon auftreten. In dem Beispiel nach Fig. 3 werden beim zu überwachenden Betriebszustand je nach dem auftretenden Wert der Versorgungsspannung und nach dem über den Überwachungseingang X zugeführten Meßwert drei in ihrer Wirkung nach außen unterscheidbare Fälle auftreten: Im ersten dieser Fälle ist die Ablenksteuerschaltung 2 abgeschaltet, die Bildwiedergabeanordnung zeigt kein Bild; im zweiten Fall ist die Ablenksteuerschaltung 2 in Betrieb, die Bildwiedergabeanordnung zeigt jedoch immer noch kein Bild; im dritten Fall befindet sich die Ablenksteuerschaltung 2 im bestimmungsgemäßen Betrieb und auch die Bildwiedergabeanordnung zeigt das normale Bild. Nach außen weniger erkennbare Zwischenstufen sind möglich, beispielsweise daß die Bus-Empfangsstufe 8 als einziger der Teile der Ablenksteuerschaltung 2 im Betrieb ist, oder daß die Bus-Empfangsstufe 8 und der Umsetzerteil 12 regulär arbeiten, der Funktionsteil 10 jedoch nicht. Als Parameter des zu überwachenden Betriebszustandes wird die Höhe der aktuell anliegenden Versorgungsspannung im Vergleich zu den Versorgungsspannungsschwellen detektiert. Damit ermöglicht es die erfindungsgemäße Anordnung (und ermöglicht es das erfindungsgemäße Verfahren), eine präzisere Analyse des Betriebszustands vorzunehmen und bei Bedarf die Steuereinheit 1 zur Behebung zu veranlassen. Insbesondere kann durch die Erfindung in einfacher Weise unterschieden werden, ob die Bildwiedergabeanordnung kein Bild zeigt, weil die Beschleunigungsspannung in der Hochspannungserzeugungsstufe 15 zu hoch geworden ist oder weil die Versorgungsspannung an der Ablenksteuerschaltung 2 zu niedrig ist.

Als einfaches Beispiel für einen Funktionsablauf in der Anordnung nach Fig. 3 sei angenommen, daß nach einem Einbruch der Versorgungsspannung die Register in dem Umsetzerteil 12 gelöscht wurden und somit der Funktionsteil 10 außer Tritt geraten ist. In diesem Fall werden im Steuerregister 14 bestimmte Befehle und/oder Daten derart gesetzt, daß in einem folgenden Adreß-, Befehls- und/oder Datentelegramm das Empfangsbestätigungssignal für das Datenwort DAT grundsätzlich unterdrückt wird. Durch wiederholte Übertragung des genannten Telegramms und entsprechend wiederholtes Auftreten der Unterdrückung des Empfangsbestätigungssignals wird im Auswerteteil 17 ein Informationssignal derart erzeugt, daß dieses das Auftreten des betreffenden Betriebszustandes anzeigt. Durch Abfrage des Signals auf der Verbindung 16 vom Überwachungsausgang H kann die Information über den eingetretenen Betriebszustand bestätigt werden. Von der Steuereinheit 1 können dann über den Bus 4, 5 Adreß-, Befehls- und/oder Datentelegramme ausgesandt werden, durch die der normale Betriebszustand der Ablenksteuerschaltung 2 wieder hergestellt wird.

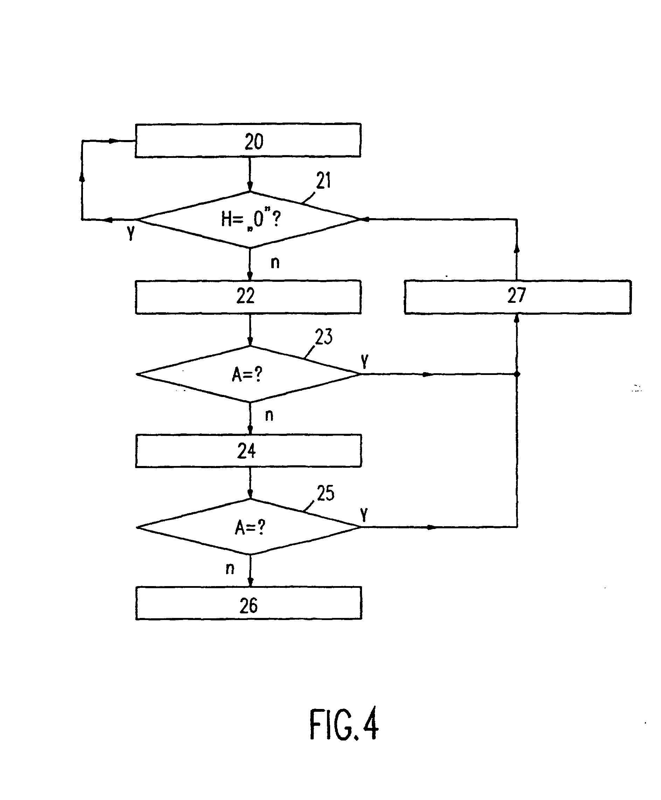

Fig. 4 zeigt ein Flußdiagramm für einen Betriebsablauf bei einem Ausführungsbeispiel der Erfindung, vorzugsweise durchzuführen mit einer Anordnung gemäß Fig. 3. Der beispielhaft dargestellte Betriebsablauf geht von dem bestimmungsgemäßen Betriebszustand der gesteuerten Einheit 2 aus, d.h. daß in der gesteuerten Einheit 2 alle Funktionen des Funktionsteils 10 fehlerfrei ablaufen. Dies ist im Flußdiagramm nach Fig. 4 durch den Block 20 "Normalbetrieb" dargestellt. Von der Steuereinheit 1 wird über die Verbindung 16 laufend das Signal vom Überwachungsausgang H überprüft. So lange sich dieses auf einem niedrigen logischen Pegel befindet, dauert der Normalbetrieb an. Zwischen der Abfrage nach dem Überwachungsausgang H mit dem Bezugszeichen 21 und dem Block "Normalbetrieb" 20 besteht somit über den Ausgang "Ja" j des Abfrageblocks 21 eine Schleife, die erst dann verlassen wird, wenn das Signal vom Überwachungsausgang H einen hohen logischen Pegel annimmt. Über den Ausgang "Nein" n des Abfrageblocks 21 wird dann der Signalverarbeitungsschritt 22 ausgelöst, in dem ein erstes Telegramm übertragen wird, welches in seiner Gliederung der Fig. 2 entspricht. In der gesteuerten Einheit 2, insbesondere in der Bus-Empfangsstufe 8, wird je nach dem Betriebszustand, in dem sich die gesteuerte Einheit 2 befindet, auf das Datenwort DAT des Telegramms ein Empfangsbestätigungssignal rückübertragen oder auch nicht. Der Eingang dieses Empfangsbestätigungssignals wird in der Steuereinheit 1 durch den Abfrageblock 23 im Flußdiagramm überprüft. Fehlt das Empfangsbestätigungssignal auf das Datenwort DAT, wird über den Ausgang "Nein" n der nächste Arbeitsschritt eingeleitet, dargestellt durch den Funktionsblock 24. Dieser entspricht in seiner Ausführung dem Block 22, d.h. das genannte erste Telegramm wird noch einmal in unveränderter Form gesendet. Daran schließt sich der Abfrageblock 25 an, in dem wie im Abfrageblock 23 das Empfangsbestätigungssignal auf das Datenwort DAT des Telegramms überprüft wird. Ist dieses Empfangsbestätigungssignal wieder nicht rückübertragen worden, wird davon ausgegangen, daß bei der gesteuerten Einheit 2 eine umfangreichere Betriebsstörung zum Beispiel durch einen Einbruch der Versorgungsspannung vorliegt. Über den Ausgang "Nein" n des Abfrageblocks 25 wird dann der Funktionsblock 26 ausgelöst, der ein völlig neues Aufstarten bzw. Initialisieren der gesteuerten Einheit 2 durchführt. Die gesteuerte Einheit 2 kann dazu bei Auftreten des Einbruchs der Versorgungsspannung in die sogenannte "Stand-by"-Betriebsart übergegangen sein, die stets bei Absinken der Versorgungsspannung unter die mittlere Versorgungsspannungsschwelle auftritt und in der nur noch die Bus-Empfangsstufe 8 in Funktion ist.

Wenn bei der ersten Abfrage 23 oder der zweiten Abfrage 25 nach dem Empfangsbestätigungssignal auf das Datenwort DAT dieses als vorhanden erkannt wird, wird über die Ausgänge "Ja" j der Abfrageblöcke 23 oder 25 ein weiterer Funktionsblock erreicht, der mit dem Bezugszeichen 27 versehen ist. Die gesteuerte Einheit 2, insbesondere der Umsetzerteil 12, ist derart ausgebildet, daß das Empfangsbestätigungssignal auf das Datenwort DAT im ersten Telegramm nur dann unterdrückt wird, wenn die Versorgungsspannung unzulässig abgesunken ist, wohingegen das Signal vom Überwachungsausgang H ein außer Tritt fallen des Funktionsteils 10 unabhängig von dessen Ursache anzeigt. Tritt nun bei den Übertragungen des ersten Telegramms spätestens bei der Abfrage 25 ein Empfangsbestätigungssignal auf, kann davon ausgegangen werden, daß eine hinreichend hohe Versorgungsspannung ununterbrochen vorhanden war und ist (da sonst das Empfangsbestätigungssignal auf das Datenwort DAT grundsätzlich unterdrückt werden würde), so daß eine einwandfreie Funktion des Umsetzerteils 12, d.h. fehlerfreie Registerinhalte in diesem Umsetzerteil 12, vorhanden sind. Es genügt dann, die Betriebsabläufe des Funktionsteils 10 zu korrigieren, beispielsweise die Horizontal- oder Vertikaloszillatoren zu synchronisieren, ohne daß eine vollständige Neu-Initialisierung auch des Umsetzerteils 12 erforderlich ist. Dieser Signalverarbeitungsschritt wird auch als ""Softstart" bezeichnet.

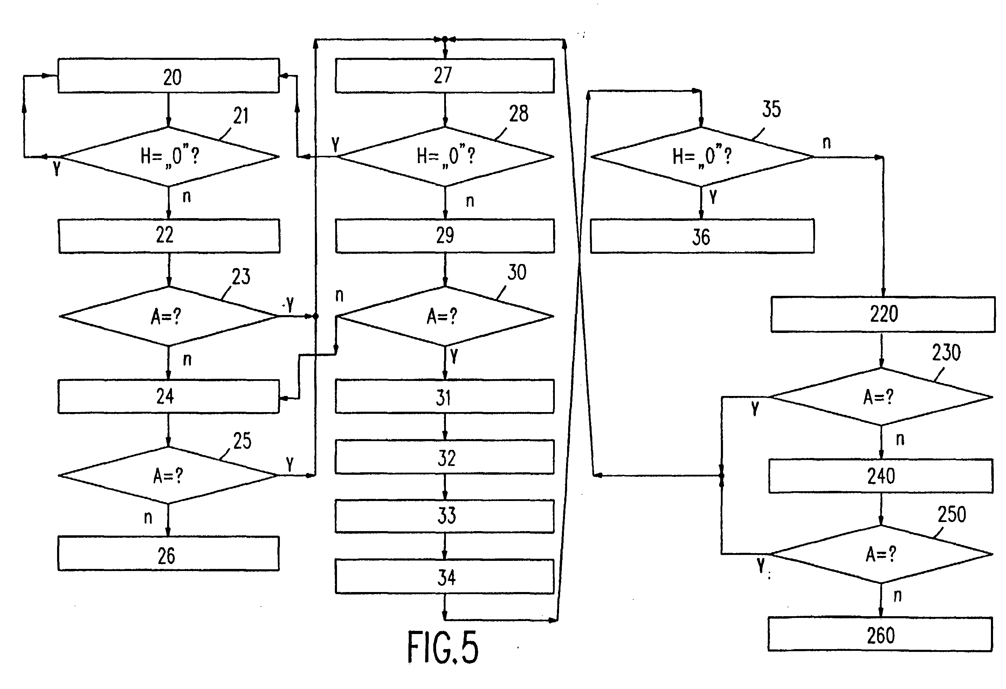

Im Ausführugsbeispiels des Flußdiagramms nach Fig. 5 ist eine Erweiterung des Ausführungsbeispiels nach Fig. 4 dargestellt, in dem bereits erläuterte Funktionsblöcke wieder mit denselben Bezugszeichen versehen sind. Während beim Ausführungsbeispiel nach Fig. 4 nach dem Funktionsblock 27 "Softstart" zum Abfrageblock 21 nach dem Signal am Überwachungsausgang H und damit in die Abfrageschleife zurückgekehrt wird, die auch im Normalbetrieb (Funktionsblock 20) der gesteuerten Einheit 2 stets durchgeführt wird, wird nach Ausführen des Funktionsblocks 27 in Fig. 5 ein weiterer Abfrageblock 28 abgearbeitet, in dem entsprechend dem Abfrageblock 21 das Signal vom Überwachungsausgang H überprüft wird. Zwar wird vom Ausgang "Ja" j des Abfrageblocks 28 wieder auf den Normalbetrieb 20 zurückgesprungen, jedoch gelangt die Steuereinheit 1 in ihrem Betriebsablauf über den Ausgang "Nein" n des Abfrageblocks 28 auf einen Funktionsblock 29. Der sich mit dem Funktionsblock 29 beginnend hier anschließende Betriebsablauf zwischen Steuereinheit 1 und gesteuerter Einheit 2 dient vorzugsweise der Analyse der Ursache für die Betriebsstörung in der gesteuerten Einheit 2. Dazu wird im Funktionsblock 29 zunächst das oben genannte erste Telegramm von der Steuereinheit 1 an die gesteuerte Einheit 2 übertragen. Im anschließenden Abfrageblock 30 wird wiederum das Empfangsbestätigungssignal A auf das Datenwort DAT des ersten Telegramms überprüft. Fehlt dieses Empfangsbestätigungssignal A, wird über den Ausgang "Nein" n des Abfrageblocks 30 der Funktionsblock 24 ausgelöst. Ist dagegen ein Empfangsbestätigungssignal A eingetroffen, wird über den Ausgang "Ja" j des Abfrageblocks 30 zum Funktionsblock 31 übergegangen.

Hat sich bei der Abfrage 30 ergeben, daß ein Empfangsbestätigungssignal A auf das Datenwort DAT im ersten Telegramm vorliegt, obgleich nach dem Softstart im Funktionsblock 27 das Signal vom Überwachungsausgang H auf hohem logischem Pegel steht, kann davon ausgegangen werden, daß die Versorgungsspannung der gesteuerten Einheit 2 fehlerfrei zur Verfügung gestanden hat, der Softstart somit aus einer anderen Ursache erfolglos geblieben ist. Um diese Ursache herauszufinden, wird im Funktionsblock 31, der sich an den Ausgang "Ja" j des Abfrageblocks 30 anschließt, die Versorgungsspannung für die gesteuerte Einheit 2 zwangsweise abgeschaltet. Im anschließenden Funktionsblock 32 wird - nach Ablauf einer vorgegebenen Zeitspanne-die Versorgungsspannung für die gesteuerte Einheit 2 wieder eingeschaltet, und zwar auf einen Wert oberhalb der höchsten Versorgungsspannungsschwelle. Dieses Ab- und Wiedereinschalten der gesteuerten Einheit 2 bildet auch die einzige Möglichkeit aus dem Betriebszustand herauszukommen, in dem der Überwachungsausgang H auf hohem logischem Pegel liegt und das Empfangsbestätigungssignal A auf das Datenwort DAT des vorgenannten ersten Telegramms ein korrektes Vorhandensein der Versorgungsspannung signalisiert.

An das Wiedereinschalten der Versorgungsspannung im Funktionsblock 32 schließt sich im Funktionsblock 33 eine Befehls- und/oder Datenübertragung an, mit der in der gesteuerten Einheit 2 der Umsetzerteil 12 wieder betriebsbereit gemacht wird. An diese Initialisierung des Umsetzerteils 12 schließt sich im Funktionsblock 34 ein Softstart des Funktionsteils 10 an. Nach dem die gesteuerte Einheit 2 auf diese Weise wieder vollständig in Betrieb genommen worden ist, wird im Abfrageblock 35 erneut der Pegel des Signals vom Überwachungsausgang H überprüft. Liegt dieses Signal jetzt auf niedrigem logischem Pegel, gelangt die Steuereinheit 1 im Flußdiagramm nach Fig. 5 zum Funktionsblock 36. Befindet sich dagegen das Signal vom Überwachungsausgang H noch auf hohem logischem Pegel, wird über den Ausgang "Nein" n des Abfrageblocks 35 ein weiterer Zweig im Flußdiagramm erreicht, der Funktions- und Abfrageblöcke 220, 230, 240, 250 und 260 umfaßt, die in Inhalt und Verknüpfung im Betriebsablauf den Funktionsblöcken 22, 23, 24, 25 bzw. 26 unmittelbar entsprechen. Durch den Zweig mit den Blöcken 220 bis 260 wird ebenfalls eine Abfrage nach dem Vorhandensein der Versorgungsspannung ausgeführt. Verläuft diese Abfrage positiv, wird zum Funktionsblock 27 gesprungen und ein weiterer Softstart ausgeführt. Ist die Abfrage dagegen erfolglos, liegt somit ein Einbruch der Versorgungsspannung vor bzw. wird ein solcher angenommen, wird dies im Funktionsblock 260 analog zum Funktionsblock 26 als Information des Inhalts ausgewertet, daß eine Neu-Initialisierung, d.h. ein komplettes neues Aufstarten, der gesteuerten Einheit 2 erforderlich ist, d.h. daß sich diese in der "Stand-by"-Betriebsart befindet.

Wird dagegen nach dem Abfrageblock 35 der Funktionsblock 36 erreicht, wertet die Steuereinheit 1 über ihren Auswerteteil 17 dies als Information des Inhalts aus, daß als Auslöser für das Auftreten des Signals am Überwachungsausgang H eine Detektion einer Überspannung über den Überwachungseingang X erfolgt ist, daß also der hier eingegebene Meßwert für die Beschleunigungsspannung von der Hochspannungserzeugungsstufe 15 einen zu hohen Wert der Beschleunigungsspannung signalisiert hat. Auch diese Signalisierung führt in der gesteuerten Einheit 2 zum Abschalten des Funktionsteils 10 und zur Ausgabe eines Signals mit hohem logischem Pegel am Überwachungsausgang H.

Neben der beschriebenen Detektion eines Einbruchs der Versorgungsspannung kann die Erfindung auch zur Übertragung anderer Informationen von der gesteuerten Einheit 2 an die Steuereinheit 1 verwendet werden. Dazu kann insbesondere das Datenwort DAT des Telegramms gemäß Fig. 2 unterschiedlich vorgegeben sein, um gezielt unterschiedliche Informationen abzufragen. Ein wiederholt unterdrücktes Empfangsbestätigungssignal A auf dieses Datenwort DAT wird als gezielte Rückübertragung einer Antwort, nicht mehr als Meldung eines Übertragungsfehlers, ausgewertet. Diese Art der Informationsübertragung kann mit anderen Messungen verbunden werden, beispielsweise mit der Überwachung des Signals vom Überwachungsausgang H gemäß Fig. 3. In gleicher Weise kann auch die Unterdrückung des Empfangsbestätigungssignals auf vorbestimmte Unteradressen SUBADR zur Übertragung von Information über den Betriebszustand der angesprochenen gesteuerten Einheit ausgenutzt werden. Auch diese Informationsgewinnung kann durch begleitende Messungen ergänzt werden.

Durch die Erfindung wird insbesondere eine I²C-Bus-Empfangsstufe zur Rückmeldung von Zustandsinformationen über das Bussystem mittels gezielter Unterdrückung des Empfangsbestätigungssignals auch nach einer erfolgreichen Datenübertragung benutzt. Ein an vorbestimmter Stelle unterdrücktes Empfangsbestätigungssignal wird von der Steuereinheit in der Weise ausgewertet, daß durch diese ein spezieller Funktionsablauf zur Analyse und/oder Korrektur des Betriebszustands ausgelöst wird. Dieser Funktionsablauf kann die Übertragung weiterer, speziell ausgestalteter Adreß-, Befehls- und/oder Datentelegramme, aber auch unabhängig davon begleitende Messungen umfassen. Dadurch kann eine Information über den Betriebszustand gewonnen werden, ohne in den gesteuerten Einheiten des I²C-Bussystems gesonderte Bus-Sendestufen vorzusehen.

Die Erfindung ist anwendbar für alle Bussysteme, die die beschriebenen Eigenschaften eines I²C-Bussystemes aufweisen, sowie alle Geräte, in denen solche Bussysteme eingesetzt werden.

## Patentansprüche

1. Anordnung mit einer Steuereinheit (1), *auch als* "Master" *bezeichnet*, und wenigstens einer gesteuerten Einheit (2, 3), *auch als* "Slave" *bezeichnet*, zum Übertragen von Adreß-, Befehls- und/oder Datentelegrammen von der Steuereinheit (1) zu der gesteuerten Einheit (2) *bzw. den gesteuerten Einheiten* (2, 3) und zum Rückübertragen je eines Empfangsbestätigungssignals (A), *auch als* "Acknowledge" *bezeichnet*, von der gesteuerten Einheit (2) *bzw*. *den gesteuerten Einheiten* (2, 3) an die Steuereinheit (1) zu jedem der Adreß-, Befehls- und/oder Datentelegramme, wobei durch das Empfangsbestätigungssignal (A) der Steuereinheit (1) eine fehlerfreie Übertragung des betreffenden Adreß-, Befehls- und/oder Datentelegramms signalisiert wird, **dadurch gekennzeichnet,**
**daß** wenigstens eine der gesteuerten Einheiten (2, 3) derart ausgebildet ist, daß das Empfangsbestätigungssignal (A) auf wenigstens eines der Adreß-, Befehls- und/oder Datentelegramme nur abhängig von einem auswählbaren Parameter des Betriebszustands der gesteuerten Einheit (2 bzw. 3) auch bei fehlerfreier Übertragung des Adreß-, Befehls- und/oder Datentelegramms unterdrückt und der Steuereinheit (1) in diesem Fall stets eine fehlerhafte Übertragung signalisiert wird, und daß die Steuereinheit (1) mit einem Auswerteteil ausgebildet ist, in dem das Ausbleiben eines Empfangsbestätigungssignals (A) auf das vorgenannte Adreß-, Befehls- und/oder Datentelegramm als Informationssignal über den auswählbaren Parameter des Betriebszustands der gesteuerten Einheit (2 bzw. 3) empfangen und verarbeitet wird.

2. Anordnung nach Anspruch 1, **dadurch gekennzeichnet,**
**daß** die gesteuerte Einheit (2) eine Überwachungsanordnung umfaßt *bzw*. *die gesteuerten Einheiten (2, 3) je eine Überwachungsanordnung* umfassen zum Überwachen des Parameters *bzw. der Parameter des* Betriebszustands und zum Unterdrücken des Empfangsbestätigungssignals (A) auf ein vorgebbares Adreß-, Befehls- und/oder Datentelegramm in Abhängigkeit von dem überwachten Parameter *bzw*. *den überwachten Parametern* des Betriebszustands.

3. Anordnung nach Anspruch 1, **dadurch gekennzeichnet,**
**daß** beim Ausbleiben eines Empfangsbestätigungssignals (A) auf ein Adreß-, Befehlsund/oder Datentelegramm dieses von der Steuereinheit (1) in einer vorgebbaren Abfolge wiederholt gesendet wird und aus einem entsprechend wiederholten Ausbleiben des Empfangsbestätigungssignals (A) eine Information über das Auftreten des auswählbaren Parameters des Betriebszustands der gesteuerten Einheit (2 bzw. 3) abgeleitet wird.

4. Anordnung nach Anspruch 1, bei der ein Adreß-, Befehls- und/oder Darentelegramm einen Adreßabschnitt (ADR; SUBADR) und einen Befehls- bzw. Datenabschnitt (DAT) umfaßt und bei der für jeden dieser Abschnitte ein gesondertes Empfangsbestätigungssignal (A) vorgesehen ist, **dadurch gekennzeichnet,**
**daß** das Unterdrücken nur des Empfangsbestätigungssignals (A) für den Befehls- bzw. Datenabschnitt (DAT) vorgesehen ist.

5. Anordnung nach Anspruch 1, **dadurch gekennzeichnet,**
**daß** der auswählbare Betriebszustand der gesteuerten Einheit (2) *bzw*. *der gesteuerten Einheiten* (2, 3) derjenige ist, der nach einem Einbruch der Versorgungsspannung (VCC) auftritt, die der gesteuerten Einheit (2) *bzw*. *den gesteuerten Einheiten* (2, 3) zugeführt wird.

6. Verfahren zum Übertragen von Adreß-, Befehls- und/oder Datentelegrammen von einer Steuereinheit (1) zu *wenigstens* einer gesteuerten Einheit (2, 3) und zum Rückübertragen je eines Empfangsbestätigungssignals (A) von der gesteuerten Einheit (2) *bzw*. *den gesteuerten Einheiten* (2, 3) an die Steuereinheit (1) zu jedem der Adreß-, Befehls- und/oder Datentelegramme, wobei durch das Empfangsbestätigungssignal (A) der Steuereinheit (1) eine fehlerfreie Übertragung des betreffenden Adreß-, Befehls- und/oder Datentelegramms signalisiert wird, **dadurch gekennzeichnet,**
**daß** das Empfangsbestätigungssignal (A) in der gesteuerten Einheit (2) *bzw*. *wenigstens einer der gesteuerten Einheiten* (2, 3) auf wenigstens eines der Adreß-, Befehls- und/oder Datentelegramme nur abhängig von einem auswählbaren Parameter des Betriebszustands der gesteuerten Einheit (2 bzw. 3) auch bei fehlerfreier Übertragung des Adreß-, Befehlsund/oder Datentelegramms unterdrückt und der Steuereinheit (1) in diesem Fall stets eine fehlerhafte Übertragung signalisiert wird, und daß das Ausbleiben eines Empfangsbestätigungssignals (A) in der Steuereinheit (1) auf das vorgenannte Adreß-, Befehls- und/oder Datentelegramm als Informationssignal über den auswählbaren Parameter des Betriebszustands der gesteuerten Einheit (2 bzw. 3) ausgewertet wird.

7. Gerät der elektronischen Nachrichtentechnik, **gekennzeichnet durch** eine Anordnung nach einem der Ansprüche 1 bis 5.

## Claims

1. An arrangement which includes a control unit (1), also referred to as a master, and at least one controlled unit (2, 3), also referred to as a slave, for the transmission of address, instruction and/or data telegrams from the control unit (1) to the controlled unit (2) or the controlled units (2, 3) and for the return of a respective reception acknowledge signal (A), also referred to as acknowledge, from the controlled unit (2) or the controlled units (2, 3) to the control unit (1) in response to each of the address, instruction and/or data telegrams, the reception acknowledge signal (A) signaling the control unit (1) the correct transmission of the relevant address, instruction and/or data telegram,
**characterized in that** at least one of the controlled units (2, 3) is constructed in such a manner that the reception acknowledge signal (A) in response to at least one of the address, instruction and/or data telegrams is suppressed exclusively in dependence on a selectable parameter of the operating state of the controlled unit (2 or 3) also in the case of correct transmission of the address, instruction and/or data telegram, the control unit (1) **in that** case always being signaled an incorrect transmission, and that the control unit (1) includes an evaluation section in which the nonarrival of a reception acknowledge signal (A) in response to said address, instruction and/or data telegram is received and processed as an information signal concerning the selectable parameter of the operating state of the controlled unit (2 or 3).

2. An arrangement as claimed in Claim 1,
**characterized in that** the controlled unit (2) comprises a monitoring device or each controlled unit (2, 3) comprises a respective monitoring device for monitoring the parameter or parameters of the operating state and for suppressing the reception acknowledge signal (A) in response to a selectable address, instruction and/or data telegram in dependence on the monitored parameter or parameters of the operating state.

3. An arrangement as claimed in Claim 1,
**characterized in that** in the case of nonarrival of a reception acknowledge signal (A) in response to an address, instruction and/or data telegram, the latter is transmitted again in a predetermined sequence by the control unit (1) and information concerning the occurrence of the selectable parameter of the operating state of the controlled unit (2 or 3) is derived from a corresponding repeated nonarrival of the reception acknowledge signal (A).

4. An arrangement as claimed in Claim 1, in which an address, instruction and/or data telegram comprises an address section (ADR; SUBADR) and an instruction or data section (DAT) and in which a separate reception acknowledge signal (A) is provided for each of these sections,
**characterized in that** only the suppression of the reception acknowledge signal for the instruction or data section (DAT) is envisaged.

5. An arrangement as claimed in Claim 1,
**characterized in that** the selectable operating state of the controlled unit (2) or the controlled units (2, 3) is the state which occurs after a collapse of the supply voltage (VCC) applied to the controlled unit (2) or the controlled units (2, 3).

6. A method for the transmission of address, instruction and/or data telegrams from a control unit (1) to at least one controlled unit (2, 3) and for the return of a respective reception acknowledge signal (A) from the controlled unit (2) or the controlled units (2, 3) to the control unit (1) in response to each of the address, instruction and/or data telegrams, the reception acknowledge signal (A) signaling the control unit (1) the correct transmission of the relevant address, instruction and/or data telegram,
**characterized in that** in the controlled unit (2) or at least one of the controlled units (2, 3) the reception acknowledge signal (A) in response to at least one of the address, instruction and/or data telegrams is suppressed exclusively in dependence on a selectable parameter of the operating state of the controlled unit (2 or 3) also in the case of correct transmission of the address, instruction and/or data telegram, the control unit (1) **in that** case always being signaled an incorrect transmission, and that the nonarrival of a reception acknowledge signal (A) in the control unit (1) in response to said address, instruction and/or data telegram is evaluated as an information signal concerning the selectable parameter of the operating state of the controlled unit (2 or 3).

7. An electronic communication apparatus,
**characterized in that** it includes an arrangement as claimed in one of the Claims 1 to 5.

## Revendications

1. Dispositif avec une unité de commande (1) aussi appelée "master" et au moins une unité commandée (2, 3) aussi appelée "slave", pour la transmission de télégrammes d'adresses, de commandes et/ou de données de l'unité de commande (1) vers l'unité commandée (2) ou les unités commandées (2, 3) et pour la retransmission d'un signal respectif d'accusé de réception (A) aussi appelé "acknowledge" de l'unité commandée (2) ou les unités commandées (2, 3) à l'unité de commande (1) vers chacun des télégrammes d'adresses, de commandes et/ou de données, une transmission sans erreur du télégramme correspondant d'adresses, de commandes et/ou de données étant signalée par le signal d'accusé de réception (A) de l'unité de commande (1), **caractérisé en ce**
**qu'**au moins une des unités commandées (2, 3) est conçue de telle sorte qu'elle supprime le signal d'accusé de réception (A) sur au moins un des télégrammes d'adresses, de commandes et/ou de données, uniquement en fonction d'un paramètre sélectionnable de l'état de fonctionnement de l'unité commandée (2 ou 3) ou en cas de transmission sans erreur du télégramme d'adresses, de commandes et/ou de données et, dans ce cas, une transmission défaillante est toujours signalée à l'unité de commande (1) et que l'unité de commande (1) est conçue avec une partie d'évaluation dans laquelle l'absence d'un signal d'accusé de réception (A) sur ledit télégramme d'adresses, de commandes et/ou de données est évaluée comme un signal d'information sur le paramètre sélectionnable de l'état de fonctionnement de l'unité commandée (2 ou 3) et traitée comme tel.

2. Dispositif selon la revendication 1, **caractérisé en ce**
**que** l'unité commandée (2) comprend un dispositif de surveillance ou les unités commandées (2, 3) comprennent respectivement un dispositif de surveillance pour la surveillance du ou des paramètres de l'état de fonctionnement et pour la suppression du signal d'accusé de réception (A) sur un télégramme d'adresses, de commandes et/ou de données à déterminer préalablement en fonction du ou des paramètres surveillés de l'état de fonctionnement.

3. Dispositif selon la revendication 1, **caractérisé en ce**
**qu'**en l'absence d'un signal d'accusé de réception (A) sur un télégramme d'adresses, de commandes et/ou de données, celui-ci est transmis à plusieurs reprises par l'unité de commande (1) dans un ordre à déterminer préalablement et, à partir de l'absence répétée correspondante du signal d'accusé de réception (A), une information est déduite sur la présence du paramètre sélectionnable de l'état de fonctionnement de l'unité commandée (2 ou 3).

4. Dispositif selon la revendication 1, dans lequel un télégramme d'adresses, de commandes et/ou de données comprend un segment d'adresse (ADR; SUBADR) et un segment de commandes ou de données (DAT) et dans lequel il est prévu un signal d'accusé de réception (A) séparé pour chacun de ces segments, **caractérisé en ce que** la suppression du seul signal d'accusé de réception (A) est prévue pour le segment de commandes ou de données (DAT).

5. Dispositif selon la revendication 1, **caractérisé en ce**
**que** l'état de fonctionnement à sélectionner de l'unité commandée (2) ou des unités commandées (2, 3) est celui qui se produit après une panne de la tension d'alimentation (VCC) amenée à l'unité commandée (2) ou aux unités commandées (2, 3).

6. Procédé de transmission de télégrammes d'adresses, de commandes et/ou de données d'une unité de commande (1) vers au moins une unité commandée (2,3) et de retransmission d'un signal respectif d'accusé de réception (A) de l'unité commandée (2) ou des unités commandées (2, 3) à l'unité de commande (1) pour chacun des télégrammes d'adresses, de commandes et/ou de données, une transmission sans erreur du télégramme correspondant d'adresses, de commandes et/ou de données étant signalée par le signal d'accusé de réception (A) à l'unité de commande (1), **caractérisé en ce**
**que** le signal d'accusé de réception (A) dans l'unité commandée (2) ou au moins une des unités commandées (2, 3) est supprimé sur au moins un des télégrammes d'adresses, de commandes et/ou de données, en fonction seulement d'un paramètre à sélectionner de l'état de fonctionnement de l'unité commandée (2 ou 3) ou en cas de transmission sans erreur du télégramme d'adresses, de commandes et/ou de données et, dans ce cas, une transmission défaillante est toujours signalée à l'unité de commande (1) et que l'absence d'un signal d'accusé de réception (A) dans l'unité de commande (1) sur ledit télégramme d'adresses, de commandes et/ou de données est évaluée comme un signal d'information sur le paramètre sélectionnable de l'état de fonctionnement de l'unité commandée (2 ou 3).

7. Appareil de l'électronique de communication, **caractérisé par** un dispositif selon l'une des revendications 1 à 5.
